# EUROPÄISCHE PATENTANMELDUNG

(11) **EP 3 007 178 A1**
(43) Veröffentlichungstag der Anmeldung: **13.04.2016**
(21) Anmeldenummer: 15002888.4
(22) Anmeldetag: 09.10.2015
(51) Int. Cl.: H01B 7/04, G02B 6/44, H01B 7/22

(54) **KABEL HOHER STEIFIGKEIT**

(30) Priorität: 10.10.2014 DE 102014014793
(71) Anmelder: Führer, Werner, 39108 Magdeburg (DE); Haberkamp, Werner, 6022 Großwangen (CH)
(72) Erfinder: Führer, Werner, 39108 Magdeburg (DE); Haberkamp, Werner, 6022 Großwangen (CH)
(74) Vertreter: Neuhäuser, Uwe

(57) **Zusammenfassung**

Vorgeschlagen wird ein Kabel (1) hoher Steifigkeit, insbesondere hoher Axialsteifigkeit, mit einem Kabelkern (2.1, 2.2) und einem denselben ummantelnden, eine Armierung (3) ausbildenden Verseilverband, wobei die Armierung (3) aus zumindest einer Verseillage zweier Gruppen über den Umfang des Kabels (1) alternierend angeordneter Verseildrähte unterschiedlichen Querschnitts mit zueinander formkomplementär ausgebildeten Kontaktflächen (4, 5) aufgebaut ist, und wobei die Verseildrähte einen bogenförmigen Profilquerschnitt aufweisen, der auf die Grundgeometrie eines Sektorprofils eines Kreisringes zurückgeführt ist. Vorteilhaft ist eine Gruppe Verseildrähte durch erste Profildrähte (6) gebildet welche ersten Profildrähte (6) beidseitig des Sektorprofils im Bereich ihrer Kontaktflächen (4) jeweils wenigstens einen sich längs des Profildrahtes (6) erstreckenden Längssteg (7) aufweisen. Die andere Gruppe Verseildrähte ist demgegenüber durch zweite Profildrähte (8) gebildet, welche zweiten Profildrähte (8) im Bereich ihrer Kontaktflächen (5) jeweils zu besagten Längsstegen (7) der unmittelbar benachbarten ersten Profildrähte (6) korrespondierende und je einen Längssteg (7) formschlüssig aufnehmende Längsnuten (9) aufweisen.

## Beschreibung

Die Erfindung betrifft ein Kabel hoher Steifigkeit, insbesondere hoher Axialsteifigkeit, gemäß dem Oberbegriff des Patentanspruchs 1 der Erfindung.

Um verwertbare Aussagen über das Vorhandensein und die Ausbeute sowie Möglichkeiten der Erschließung von Erdöl- und Erdgasvorkommen zu erhalten, werden geophysikalische Messungen mittels eines Kabels und zugehöriger Messköpfe bzw. Sonden in vertikalen und teilweise auch in horizontal geneigten Bohrlöchern mit großen Längen durchgeführt.

Geophysikalische Messungen werden sowohl am offenen Bohrloch als auch nach Absenkung eines Förderrohres unter Förderbedingungen, respektive am geschlossenen Bohrloch durchgeführt. Die Messköpfe bzw. Sonden werden dazu entweder am Messkabel herabgelassen oder sie sind bereits vor dem Einbringen des Kabels in das Bohrloch an einem distalen Ende des Kabels plaziert. Dies setzt jedoch voraus, dass die Mess- und Erkundungskabel mit zugehöriger Messtechnik für die den Teufen immanenten Drücke, Temperaturen und Feuchten ausgelegt sind.

Zur Gewährleistung des Kabeleinschubs in insbesondere horizontal gebohrte Bohrlöcher ist aufgrund der Kontaktierung des Mess- und Erkundungskabels mit der Bohrlochwandung eine axiale Krafteinleitung erforderlich, mit der die durch Kontaktierung verursachten Reib- und Bremswiderstände überwunden werden müssen. Dies kann nur mit einem Kabel erreicht werden, dass ausreichend Schubkräfte aufnehmen kann.

Aus dem Stand der Technik sind Mess- und Erkundungskabel vorbekannt, deren Kern von einer Armierung bestehend aus zwei Lagen hochfester Stahldrähte, insbesondere Runddrähte, mit 0,8 bis 1,3 Millimeter Durchmesser umschlossen ist. Diese Kabel können nur Zugkräfte aufnehmen. Weiterhin müssen die für die Armierung eingesetzten Runddrähte gereckt werden, um einen gleichmäßigen Sitz bzw. eine gleichmäßige Ausrichtung über dem Umfang des Kabels zu erzielen. Darüber hinaus können derartig ausgebildete Kabel das Einbringen von zum Teil aggressiven Medien, wie z. B. von Fluiden oder Feststoffen, nicht wirkungsvoll verhindern. Das aus der Armierung nicht wieder austretende Wasser erhöht die Korrosionsgefahr oder die Gefahr der Zersetzung des Kabelkerns. Zusammenfassend kann festgestellt werden, dass derartige Mess- und Erkundungskabel mangels ausreichender Axialsteifigkeit und auf Grund ihrer nicht mediendicht geschlossenen Armierung sich für größere Teufen und das Ausmessen von langen horizontalen Bohrlöchern mit geringer Neigung nicht eignen.

Um dem vorstehend beschriebenen nachteiligen Umstand zu begegnen, beschreibt die DE 38 08 049 A1 ein ein- oder mehradriges elektrisches Kabel, insbesondere Bohrloch- oder Schachtkabel, welches aus einer über einer Seele angeordneten Bewährung sowie einer darüber befindlichen Umhüllung aufgebaut ist. Im Besonderen umfasst das Bohrloch- oder Schachtkabel eine Vielzahl von Einzeldrähte, die von einer Isolierung, z.B. aus PE (PE = Polyethylen), umgeben sind. Als Bewehrung oder Armierung dienen wendelförmig die Isolierung umgebende Kunststoffstränge. Die Kunststoffstränge umfassen eine z.B. aus PP (PP = Polypropylen) bestehende Umhüllung, in welcher sich hochzugfeste Fäden oder Garne longitudinal erstrecken. Die Kunststoffstränge können zur Erzielung einer ausreichenden Gewölbefestigkeit eine Z-förmige Querschnittsform aufweisen. Des Weiteren können die hochzugfesten Fäden oder Garne auch in einem Formstrang aus PP angeordnet sein, der auf der einen Seite eine Nut und auf der anderen Seite eine Feder aufweist, vermittels derselben der Formstrang mit den benachbarten Formsträngen formschlüssig verbunden ist und so die Bewehrung oder Armierung ausbildet. Dadurch soll die Querdruckstabilität der Bewehrung oder Armierung verbessert sein. Über der Lage Kunststoffstränge ist eine weitere Lage aus aufgeseilten Metalldrähten, wie Runddrähten, oder aus einem Drahtgeflecht oder aus einem gewellten Metallmantel aufgebracht. Die weitere Lage ist von einer Hülle aus einem abriebfesten Kunststoff umgeben.

Die DE 10 2004 015 219 A1 beschreibt ein Kabel für geophysikalische Mess- und Erkundungszwecke, insbesondere zur Anwendung in der Erdöl- und Erdgasförderindustrie. Dieses Kabel weist einen Kabelkern auf, der mehrere zu einem Leiterbündel zusammengefasste und voneinander isolierte Leiter sowie einen das Leiterbündel umgebenden Mantel aus in Kunststoff eingebetteten Glasfasern umfasst. Eine den Außenmantel des Kabels bildende Armierung ist aus mindestens einer Lage Z-Drähte aufgebaut, die schraubenlinienförmig über einen längeren Abschnitt, nämlich die Schlaglänge des Kabels, um den Mantel geschlagen sind, wobei jeweils benachbarte Z-Drähte formschlüssig aneinander anschließen und ineinander greifen.

Die US 2008/0289849 A1 beschreibt ein Kabel für geophysikalische Mess- und Erkundungszwecke bzw. ein Bohrlochkabel, welches umfasst, mindestens einen in einem Isoliermantel eingehüllten metallischen Leiter, eine Schicht innerer Bewehrungsdrähte, die den isolierten Leiter umgibt, und eine Schicht äußerer Bewehrungsdrähte, die die inneren Bewehrungsdrähte umgibt. Die innere Schicht Bewehrungsdrähte kann durch Runddrähte oder Profildrähte gebildet sein. Die äußere Schicht kann durch Runddrähte, durch Profildrähte oder durch eine Kombination aus Rund- und Profidrähten gebildet sein. In Zwischenräumen zwischen den inneren Bewehrungsdrähten, in Zwischenräumen zwischen den äußeren Bewehrungsdrähten, sowie in Zwischenräumen zwischen den inneren Bewehrungsdrähten und dem isolierten Leiter ist ein Polymermaterial eingebracht, wobei besagtes Polymermaterial die Bewehrungsdrähte umhüllt und voneinander trennt.

Die DE 10 2009 057 147 A1 beschreibt ein Kabel für geophysikalische Mess- und Erkundungszwecke, mit einem Kabelkern und einem denselben ummantelnden, eine Armierung ausbildenden Verseilverband. Die Armierung ist aus zumindest einer Verseillage zweier Gruppen über dem Umfang des Kabels alternierend angeordneter Verseildrähte unterschiedlichen Querschnitts mit zueinander komplementär ausgebildeten Kontaktflächen aufgebaut. Dabei ist eine Gruppe Verseildrähte durch Runddrähte und die andere Gruppe Verseildrähte durch Profildrähte gebildet. Die Profildrähte weisen einen bogenförmigen Profilquerschnitt auf, der auf die Grundgeometrie eines Sektorprofils eines Kreisringes zurückgeführt ist. Die Kontaktflächen der Profildrähte sind komplementär zu den Kontaktflächen der benachbarten Runddrähte konkav ausgebildet.

Darüber hinaus sind aus der DE 100 59 918 A1 ein Kabel, insbesondere ein Seekabel, sowie ein Verfahren zu dessen Herstellung bekannt. Hierbei ist die Kabelseele von einer Armierung umgeben, wobei bedarfsweise eine zur Bildung der Armierung vorgesehene Anzahl von Armierungsdrähten durch eine teilbereichsweise Platzierung von Füllsträngen ersetzt ist. Die Füllstränge sind zur Verringerung des Gewichts vorzugsweise aus Kunststoff gebildet. Aufgrund der Tatsache, dass das Kabel in Richtung seiner Längsachse unterschiedlich stark belastbare Armierungen aufweist, eignet sich dieses nicht als geophysikalisches Mess- und Erkundungskabel, da es zum einen keine für eine Zug- und Druckkraftbeaufschlagung ausreichende Axialsteifigkeit und zum anderen keine konstante Axialsteifigkeit in Richtung seiner Längsachse aufweist.

Die DE 38 10 746 C2 beschreibt des Weiteren ein Seekabel mit einer mindestens einen Lichtwellenleiter aufweisenden Kabelseele und mit wenigstens einer Armierung aufweisen Ummantelung. Die von der Armierung eingeschlossene Kabelseele ist hierbei vollständig unter Verwendung einer mehrschichtig aufgebauten Hochspannungs-Isolierschicht ausgefüllt. Kennzeichnend für diese technische Lösung ist, dass die von einem Außenmantel aus einem elastischen Kunststoff ummantelte Armierung aus ineinander greifenden Z-förmigen Profildrähten ausgebildet ist, und dass innerhalb der Kabelseele ein mindestens die Lichtwellenleiter rohrförmig umgebender elektrischer Leiter aus mehreren Segmentdrähten angeordnet ist. Eine Verwendung dieses Seekabels als Kabel für geophysikalische Mess- und Erkundungszwecke scheidet bereits wegen des durch die einzelnen Schichten bedingten hohen spezifischen Durchmessers aus.

Hiervon ausgehend ist es Aufgabe der Erfindung, ein im Hinblick auf den Stand der Technik alternatives Kabel hoher Steifigkeit, insbesondere hoher Axialsteifigkeit, zu schaffen, welches gemäß einem ersten Aspekt der Erfindung einfach und kostengünstig herstellbar ist und hohe Druck- und Zugkräfte sowie ohne jedwede Verformung Differenzinnendrücke des Kabels aufnehmen kann. Gemäß einem zweiten Aspekt der Erfindung soll das Kabel bei größeren Teufen auch das Erkunden und Ausmessen von langen horizontalen Bohrlöchern oder Bohrlöchern mit geringer Neigung erlauben. Gemäß einem dritten Aspekt der Erfindung soll das Kabel den Durchtritt von insbesondere Fluiden durch seine Außenhülle zuverlässig verhindern.

Ausgehend von einem Kabel hoher Axialsteifigkeit, mit einem Kabelkern und einem denselben ummantelnden, eine Armierung ausbildenden Verseilverband, wobei die Armierung aus zumindest einer Verseillage zweier Gruppen über den Umfang des Kabels alternierend angeordneter Verseildrähte unterschiedlichen Querschnitts mit zueinander formkomplementär ausgebildeten Kontaktflächen aufgebaut ist, und wobei die Verseildrähte einen bogenförmigen Profilquerschnitt aufweisen, der auf die Grundgeometrie eines Sektorprofils eines Kreisringes zurückgeführt ist, wird die gestellte Aufgabe dadurch gelöst, dass
- eine Gruppe Verseildrähte durch erste Profildrähte gebildet ist, welche ersten Profildrähte beidseitig des Sektorprofils im Bereich ihrer Kontaktflächen jeweils wenigstens einen sich längs des Profildrahtes erstreckenden Längssteg aufweisen, wogegen
- die andere Gruppe Verseildrähte durch zweite Profildrähte gebildet ist, welche zweiten Profildrähte im Bereich ihrer Kontaktflächen jeweils zu besagten Längsstegen der unmittelbar benachbarten ersten Profildrähte korrespondierende und je einen Längssteg formschlüssig aufnehmende Längsnuten aufweisen.

Durch diese Maßnahme ist bei erzielter hoher Axialsteifigkeit des Kabels auch in radialer Richtung ein besonders fester Verbund zwischen den beiden Gruppen Verseildrähte in Form erster und zweiter Profildrähte gewährleistet. In umfangreichen Versuchen wurde gefunden, dass gerade durch Ausbildung des einen Profildrahtes mit ausschließlich Längsstegen und demgegenüber der unmittelbar benachbarten Profildrähte mit ausschließlich Längsnuten, der Verbund besonders fest und unauflösbar sowie aufgrund der formkomplementär ausgebildeten, formschlüssig ineinander greifenden Kontaktflächen fluiddicht ist.

Die Unteransprüche beschreiben bevorzugte Weiterbildungen oder Ausgestaltungen der Erfindung.

Um die Herstellung der Armierung, insbesondere das Verseilen der Profildrähte mit Formschluss derselben untereinander zu erleichtern, ist vorgesehen, dass die Längsstege im Querschnitt eines jeden ersten Profildrahtes gesehen zu ihrem freien Ende hin sich verjüngend ausgebildet sind, welche während der Herstellung der Armierung dann bevorzugt in formkomplementär ausgebildete Längsnuten eindringen. Die Längsstege können dabei im Querschnitt gesehen spitz zulaufend, trapezförmig oder konvex gerundet ausgebildet sein. Ein wirkungsgleicher, zumindest jedoch ähnlicher Effekt ist erzielbar, wenn zumindest die freien Enden der Längsstege im Querschnitt gesehen trapezförmig, konvex gerundet oder spitz zulaufend, ausgebildet sind. In Fortbildung der Erfindung kann darüber hinaus durch eine bestimmte Auslegung der Längsstege im Verhältnis zu den dieselben formschlüssig aufnehmenden Längsnuten eine Übermaßpassung (Presspassung) bewirkt werden, wodurch vorteilhaft der Formschluss mit einem Kraftschluss kombiniert ist. Hierdurch werden die Festigkeit des Verbundes der Armierung sowie die Fluiddichtigkeit des Kabels noch weiter erhöht.

Was den Kabelkern anbelangt, kann dieser in Abhängigkeit des gewählten Anwendungsfalls vorteilhaft einen Vollquerschnitt oder alternativ einen Rohrquerschnitt aufweisen. Die axiale und radiale Stabilität des Kabels wird im Wesentlichen mit der vorstehend beschriebenen besonders ausgebildeten Armierung bewirkt.

Wie die Erfindung weiter vorsieht, weist der Kabelkern zumindest einen elektrischen Leiter und/oder Signalleiter auf. Vorteilhaft kann der Kabelkern auch ein oder mehrere Leiter oder Leiterbündel aufweisen, die beispielsweise durch elektrische und/oder Signalleiter gebildet sind, wobei als Signalleiter bevorzugt Lichtwellenleiter, weiter bevorzugt Lichtwellenleiter aus einem temperatur-hochbeständigen Fiberglas Verwendung finden. Vorteilhaft können besagte Leiter oder Leiterbündel selbst mediendicht ummantelt sein, um dieselben unmittelbar vor Umwelteinflüssen unterschiedlichster Art zu schützen. Die elektrischen Leiter oder Signalleiter sind im Hinblick auf besagten Vollquerschnitt des Kabelkerns bevorzugt in diesen eingebettet. Wird demgegenüber ein Kabelkern mit einem Rohrquerschnitt favorisiert, sind ein oder mehrere Leiter bevorzugt im besagten Rohrquerschnitt eingebettet und/oder im gebildeten Hohlraum des rohrförmigen Kabelkerns angeordnet. Wie die Erfindung noch vorsieht, weist der Kabelkern wenigstens ein Mittel zur elektromagnetischen Abschirmung des zumindest einen elektrischen Leiters und/oder Signalleiters auf. Das wenigstens eine Mittel zur elektromagnetischen Abschirmung ist dabei bevorzugt durch ein bandförmiges oder schlauchförmiges Metallnetz und/oder durch eine bandförmige oder schlauchförmige Metallfolie gebildet.

Um eine axiale Relativbewegung zwischen dem Kabelkern und der Armierung während des bestimmungsgemäßen Gebrauchs des Kabels, insbesondere als geophysikalisches Mess- und Erkundungskabel in langen Bohrlöchern, wirkungsvoll zu verhindern, ist der Kabelkern mit der Armierung durch Stoff-, Form- und/oder Kraftschluss axial fest verbunden. Der Stoffschluss wird dabei bevorzugt mittels eines Klebstoffes bewirkt, der seinerseits weiter bevorzugt auf den Kabelkern aufgebracht wird und nach dem Ummanteln des Kabelkerns mit der Armierung respektive dem Aufseilen der Verseildrähte auf den Kabelkern abbindet bzw. aushärtet. Dabei fungiert der Klebstoff in vorteilhafter Weise gleichzeitig als Abdichtmittel, indem es etwaige noch vorhandene Hohlräume zwischen den Profildrähten der Armierung des Kabels und zwischen den Profildrähten und dem Kabelkern ausfüllt, wodurch eine besonders hohe Fluiddichtheit des Kabels gewährleistet ist.

Was den besagten Form- und/oder Kraftschluss zwischen der Armierung des Kabels und dem Kabelkern anbelangt, ist dieser mittels wenigstens einer Erhebung bewirkt, welche Erhebung an einer zum Kabelkern weisenden Kontaktfläche zumindest eines Profildrahtes ausgebildet ist und nach radial innen gerichtet mittel- oder unmittelbar in die Oberfläche des Kabelkerns formschlüssig eindringt, zumindest jedoch gegen die Oberfläche des Kabelkerns gepresst wird/ist. Die Erhebung kann sich dabei längs des Profildrahtes erstrecken, wodurch sich diese wendelförmig um den Kabelkern schlingt und so eine axiale Relativbewegung zwischen der Armierung des Kabels und dem Kabelkern verhindert, zumindest jedoch wirkungsvoll behindert. Alternativ kann die wenigstens eine Erhebung sich auch quer zur Längserstreckung des Profildrahtes erstrecken. Sind mehrere derartige Erhebungen vorgesehen, ist beispielsweise eine Kontaktfläche mit dem Kabelkern gebildet, welche nach Art einer Zahnstange zumindest abschnittsweise abwechselnd Erhebungen respektive Zähne und Zahnlücken aufweist, welche Zähne in die Oberfläche des Kabelkerns formschlüssig eindringen, zumindest jedoch gegen die Oberfläche gepresst werden und so besagte axiale Relativbewegung verhindern, zumindest jedoch wirkungsvoll behindern. Bevorzugt bestehen die Profildrähte aus einem Stahl, der seinerseits geeignet ist, hohen und höchsten auf das Kabel einwirkenden Kräften zu widerstehen, beispielsweise bei Verwendung desselben für geophysikalische Mess- und Erkundungszwecke, insbesondere in der Erdöl- und Erdgasförderindustrie. Im Hinblick darauf wird besagte wenigstens eine Erhebung bevorzugt bereits bei der Herstellung des zumindest einen Profildrahtes nach einem Walzverfahren ausgebildet.

Zur Erzielung eines qualitätsgerechten Lagenaufbaus des die Armierung ausbildenden Verseilverbandes sind die Profildrähte aus insbesondere Stahl rückdrehungsfrei verseilt sowie spannnungsfrei in den Verseilverband gelegt, indem die Profildrähte vermittels an sich bekannter Vorformungseinrichtungen vorab eine entsprechende Vorformung erfahren.

Das vorstehend beschriebene Kabel ist wie bereits oben angedeutet vorteilhaft für geophysikalische Mess- und Erkundungszwecke, insbesondere in der Erdöl- und Erdgasförderindustrie, einsetzbar. Darüber hinaus ist es jedoch auch als See-Kabel oder als sonstiges Kabel mit einem oder mehreren elektrischen und/oder Signalleitern, wie beispielsweise als Erdkabel einsetzbar.

Die Erfindung wird nachstehend anhand der in den Zeichnungen schematisch dargestellten Ausführungsbeispiele näher erläutert. Sie ist jedoch nicht auf diese beschränkt, sondern erfasst alle durch die Patentansprüche definierten Ausgestaltungen. Es zeigen:
- Fig. 1: eine Darstellung des erfindungsgemäß ausgebildeten Kabels im Querschnitt gemäß einer ersten Ausgestaltungsvariante,
- Fig. 2: eine Darstellung eines erfindungsgemäß ausgebildeten Kabel im Querschnitt gemäß einer zweiten, bevorzugten Ausgestaltungsvariante,
- Fig. 3a - 3d: die Einzelheiten "Z₁" bis "Z₄" nach Fig. 1 mit einer detaillierten Darstellung erfindungswesentlicher Profildrähte des Kabels in vier verschiedenen Ausgestaltungsvarianten derselben, und
- Fig. 4a, 4b: Die Einzelheiten "Y₁" und "Y₂" nach Fig. 2 mit zwei weiteren vorteilhaften Ausgestaltungsvarianten der besagten Profildrähte.

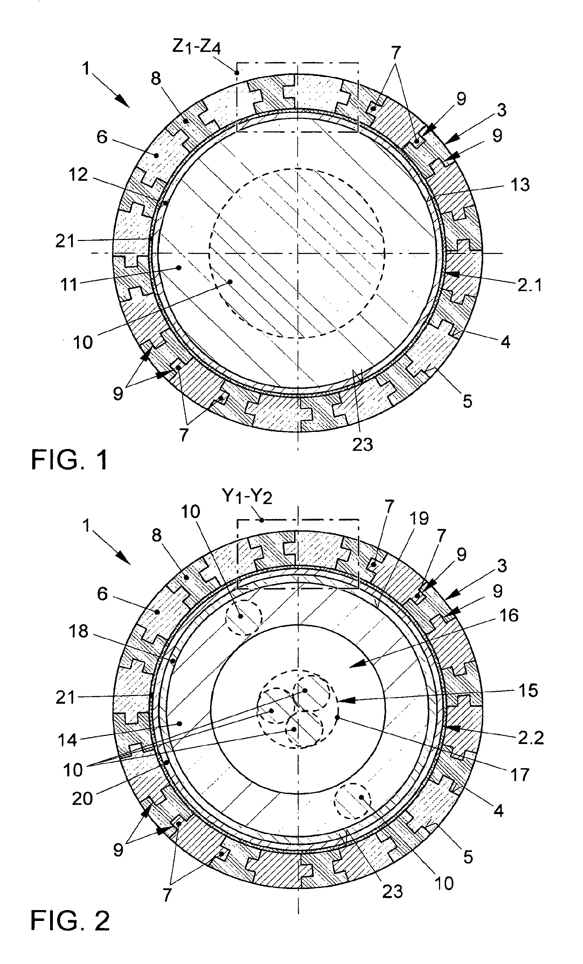

Die Fig. 1 und 2 zeigen jeweils ein erfindungsgemäß ausgebildetes Kabel 1 im Querschnitt mit einem äußerst schematisch angedeuteten Kabelkern 2.1, 2.2 der seinerseits von einem eine Armierung 3 ausbildenden Verseilverband ummantelt ist. Die Armierung 3 ist aus zwei Gruppen über den Umfang des Kabels 1 alternierend angeordneter Verseildrähte unterschiedlichen Querschnitts mit zueinander formkomplementär ausgebildeten Kontaktflächen 4, 5 aufgebaut. Die Verseildrähte beider Gruppen weisen einen bogenförmigen Profilquerschnitt auf, der auf die Grundgeometrie eines Sektorprofils eines Kreisringes zurückgeführt ist.

Eine Gruppe Verseildrähte ist durch erste Profildrähte 6 gebildet, welche ersten Profildrähte 6 beidseitig des besagten Sektorprofils im Bereich ihrer Kontaktflächen 4 jeweils einen sich längs des ersten Profildrahtes 6 erstreckenden Längssteg 7 aufweisen. Die Erfindung beschränkt sich jedoch nicht auf einen Längssteg 7 je Kontaktfläche 4, sondern erfasst auch zwei oder mehr in radialer Richtung des Kabels 1 gesehen übereinander angeordnete Längsstege 7 zumindest im Bereich einer der besagten Kontaktflächen 4 (nicht zeichnerisch dargestellt). Die andere Gruppe Verseildrähte ist demgegenüber durch zweite Profildrähte 8 gebildet, welche zweiten Profildrähte 8 im Bereich ihrer Kontaktflächen 5 jeweils zu besagten Längsstegen 7 der unmittelbar benachbarten ersten Profildrähte 6 korrespondierende und je einen Längssteg 7 formschlüssig aufnehmende Längsnuten 9 aufweisen.

Bevorzugt bestehen die Profildrähte 6, 8 aus einem Stahl, der seinerseits geeignet ist, hohe und höchste auf das Kabel 1 einwirkende Kräfte zu übertragen. Beispielsweise bei Verwendung des Kabels für geophysikalische Mess- und Erkundungszwecke, insbesondere in der Erdöl- und Erdgasförderindustrie, sind aufgrund der großen Bohrlochlängen bis zu 8.000m besonders hohe axiale Druck- und Zugkräfte zu übertragen. Überdies sind in großen Tiefen, insbesondere im Offshor-Betrieb, hohe Differenzinnendrücke des Kabels 1 zu verzeichnen, die die Armierung 3 ohne Verformung und bei Gewährleistung einer hohen Fluiddichtigkeit in radialer bzw. Querrichtung des Kabels 1 aufnehmen muss.

Gemäß den Fig. 1, 2 und 3a weisen die Längsstege 7 und die hierzu formkomplementär ausgebildeten Längsnute 9 einen rechteckigen oder quadratischen Querschnitt auf. Hierdurch erstrecken sich die nach radial innen und nach radial außen weisenden Flächen der Längsstege 7 auf einer Normalen zum Radius des Kabels 1. Hieraus resultiert ein hoher Widerstand der Profildrähte 6, 8 gegen radiales Auflösen des Verbundes der Armierung 3, insbesondere bei zu verzeichnenden hohen Innendrücken des Kabels 1.

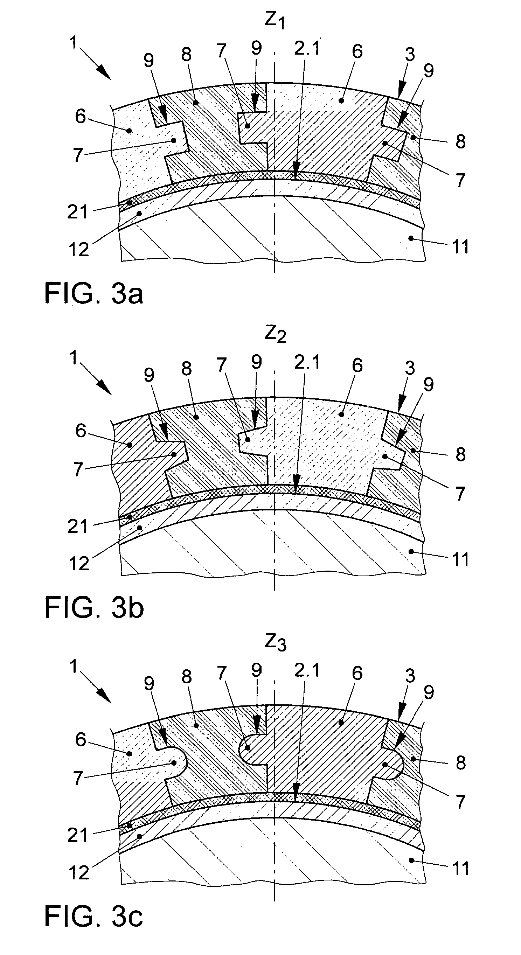

Um die Herstellung der Armierung 3, insbesondere das Verseilen der ersten und zweiten Profildrähte 6, 8 mit Formschluss derselben untereinander zu erleichtern, ist vorgesehen, dass die Längsstege 7 der ersten Profildrähte 6 im Querschnitt eines jeden ersten Profildrahtes 6 gesehen zu ihrem freien Ende hin sich verjüngend ausgebildet sind. Durch diese Maßnahme können während der Herstellung der Armierung 3 die Längsstege 7 leicht in die jeweils zugeordnete, bevorzugt formkomplementär ausgebildete Längsnut 9 eingeführt werden. Die Längsstege 7 sind dabei im Querschnitt gesehen bevorzugt trapezförmig (Fig. 3b) oder konvex gerundet (Fig. 3c) ausgebildet. Denkbar ist es ebenfalls und demgemäß durch die Erfindung mit erfasst, einen spitz zulaufenden Querschnitt der Längsstege 7 vorzusehen (nicht zeichnerisch dargestellt).

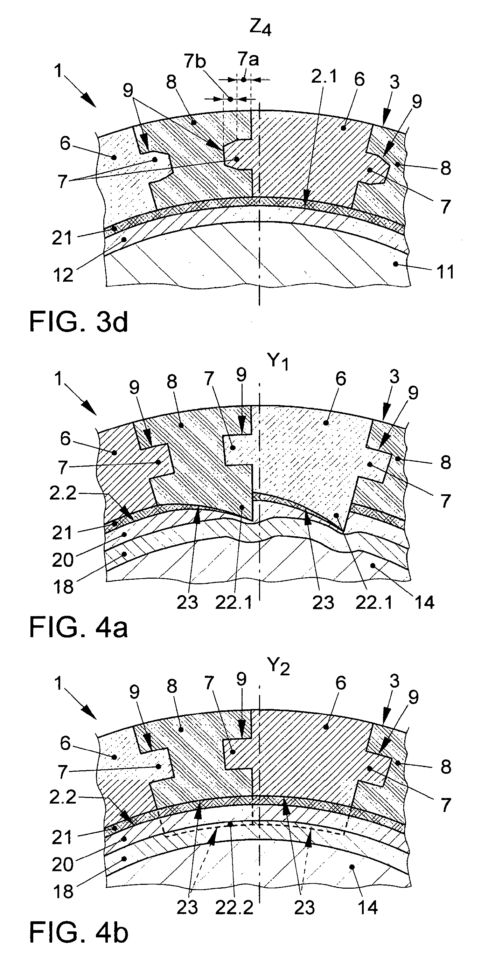

Ein wirkungsgleicher, zumindest jedoch wirkungsähnlicher Effekt ist erzielbar, wenn zumindest die freien Enden der Längsstege 7 im Querschnitt gesehen trapezförmig (vgl. Fig. 3d) oder konvex gerundet oder spitz zulaufend, ausgebildet sind (nicht zeichnerisch dargestellt). Diese Maßnahme hat den Vorteil, dass bei Gewährleistung eines hohen Widerstandes der Profildrähte 6, 8 gegen radiales Auflösen des Verbundes der Armierung 3 das Fügen der Profildrähte 6, 8 untereinander ebenfalls vereinfacht ist. Dabei ist je Längssteg 7 ein erster, profilseitiger Abschnitt 7a desselben mit nach radial innen und nach radial außen weisenden Flächen vorgesehen, die auf einer Normalen zum Radius des Kabels 1 liegen, wobei zumindest einer der besagten ersten Abschnitte 7a in einen zweiten, freien End-Abschnitt 7b übergeht, der geneigt ausgebildet ist derart, dass sich der Querschnitt des Längssteges 7 in diesem End-Abschnitt 7b verjüngt.

In Fortbildung der Erfindung kann darüber hinaus durch eine bestimmte Auslegung der Längsstege 7 im Verhältnis zu den dieselben formschlüssig aufnehmenden Längsnuten 9 eine Übermaßpassung (Presspassung) bewirkt werden, wodurch vorteilhaft der Formschluss mit einem Kraftschluss kombiniert ist (nicht zeichnerisch dargestellt). Hierdurch werden die Festigkeit des Verbundes der Armierung 3 sowie die Fluiddichtigkeit des Kabels 1 noch weiter erhöht.

In Abhängigkeit des gewählten Anwendungsfalls des Kabels 1 kann der Kabelkern 2.1, 2.2 gemäß Fig. 1 einen Vollquerschnitt oder alternativ gemäß Fig. 2 einen Rohrquerschnitt aufweisen. Die axiale und radiale Stabilität respektive Steifigkeit des Kabels 1 wird im Wesentlichen mit der vorstehend beschriebenen besonders ausgebildeten Armierung 3 bewirkt.

Der Kabelkern 2.1 mit Vollquerschnitt weist gemäß der in Fig. 1 gezeigten Ausgestaltung der Erfindung lediglich beispielgebend einen elektrischen Leiter 10, insbesondere Kupferleiter auf, der in der Fig. 1 durch eine gestrichelte Linienführung gekennzeichnet ist. Der elektrische Leiter 10 ist von einem Mantel 11 aus einem synthetischen Polymer abgedeckt respektive in besagtes Polymer eingebettet. Der besagte Mantel 11 wird bevorzugt nach einem an sich bekannten Extrusionsverfahren auf den elektrischen Leiter 10 aufgebracht.

Statt des besagten elektrischen Leiters 10 kann auch ein nicht zeichnerisch dargestellter Signalleiter, beispielsweise in Form eines Lichtwellen-Leiters aus einem bevorzugt temperatur-hochbeständigen Fiberglas vorgesehen sein. Vorteilhaft kann der Kabelkern 2.1 auch einen oder mehrere Leiterbündel aufweisen, die beispielsweise durch elektrische Leiter 10 und/oder Signalleiter, wie LichtwellenLeiter, gebildet sind (nicht zeichnerisch dargestellt). Vorteilhaft können die elektrischen Leiter 10 oder Signalleiter oder Leiterbündel selbst mediendicht ummantelt sein, um dann jedoch noch von besagtem Mantel 11 abgedeckt zu werden. (nicht zeichnerisch dargestellt).

Der Kabelkern 2.1 weist ein Mittel 12 zur elektromagnetischen Abschirmung des vorliegend beispielgebend einzigen elektrischen Leiters 10 auf. Das Mittel 12 zur elektromagnetischen Abschirmung ist bevorzugt durch ein im Detail nicht näher dargestelltes, jedoch an sich bekanntes bandförmiges oder schlauchförmiges Metallnetz und/oder durch eine bandförmige oder schlauchförmige Metallfolie gebildet. Das Metallnetz bzw. Metallband besteht bevorzugt aus Kupfer oder einer Kupferlegierung. Das Mittel 12 zur elektromagnetischen Abschirmung respektive das Metallnetz oder die Metallfolie ist wie vorliegend dargestellt auf die Außenmantelfläche 13 des Mantels 11 aufgebracht, beispielsweise als Band auf den Mantel 11 aufgewickelt oder aufgeflochten oder als Schlauch auf den Mantel 11 aufgezogen.

Demgegenüber kann das Mittel 12 zur elektromagnetischen Abschirmung respektive das Metallnetz oder die Metallfolie in den Mantel 11 sozusagen eingebettet bzw. integral mit demselben ausgebildet sein. Hierbei fungiert das Mittel 12 zur elektromagnetischen Abschirmung respektive das Metallnetz oder die Metallfolie sozusagen als Einlegeteil, indem es während der Herstellung des Mantels 11 nach besagtem Extrusionsverfahren in die Extrusionsmasse des Mantels 11 kontinuierlich eingebettet wird (nicht zeichnerisch dargestellt).

Der Kabelkern 2.2 gemäß Fig. 2 weist im Unterschied zum Kabelkern 2.1 nach Fig. 1 einen Rohrquerschnitt auf. Der besagte Rohrquerschnitt ist bevorzugt durch ein vorgefertigtes langgestrecktes Rohr 14 aus einem synthetischen Polymer gebildet. Ein derartiges Rohr 14 wird bevorzugt nach einem an sich bekannten Extrusionsverfahren hergestellt. Vorliegend sind lediglich beispielgebend zwei elektrische Leiter 10 (gestrichelte Linienführung) im besagten Rohrquerschnitt des Rohres 14 bzw. in dessen Rohrwandung eingebettet. Überdies ist in Fig. 2 ebenfalls lediglich beispielgebend ein Leiterbündel 15 mit drei voneinander isolierten elektrischen Leitern 10 gezeigt, welches Leiterbündel 15 im gebildeten Hohlraum 16 des rohrförmigen Kabelkerns 2.2 relativ frei angeordnet ist. Das Leiterbündel 15 ist dabei selbst noch von einer Schutzisolierung 17 ummantelt.

In Anlehnung an die Ausführungsform des Kabels 1 nach Fig. 1 weist der rohrförmige Kabelkern 2.2 ebenfalls ein Mittel 18 zur elektromagnetischen Abschirmung, bevorzugt in Form eines an sich bekannten bandförmigen oder schlauchförmigen Metallnetzes und/oder in Form einer bandförmigen oder schlauchförmigen Metallfolie auf. Das Mittel 18 zur elektromagnetischen Abschirmung ist auf die Außenmantelfläche 19 des Rohres 14 aufgebracht, insbesondere aufgewickelt, aufgeflochten oder aufgezogen. Überdies ist das Rohr 14 samt Mittel 18 zur elektromagnetischen Abschirmung mittels eines Mantels 20 aus einem synthetischen Polymer abgedeckt. Der Mantel 20 ist bevorzugt nach einem an sich bekannten Extrusionsverfahren derart aufgebracht, dass das Mittel 18 zur elektromagnetischen Abschirmung in die Extrusionsmasse des Mantels 20 eingebettet wird. Bevorzugt bestehen das Rohr 14 und der Mantel 20 aus einem chemisch identischen oder weitestgehend identischen Material, so dass diese eine chemische Bindung eingehen und somit einen homogenen Materialverbund ausbilden.

Das synthetische Polymer sowohl zur Ausbildung des Mantels 20 des Kabelkerns 2.1 als auch des Rohres 14 und des Mantels 20 zur Ausbildung des Kabelkerns 2.2 ist bevorzugt ein ETFE (ETFE = Ethylen-Tetrafluorethylen). ETFE verbindet vorteilhaft eine hohe Temperaturbeständigkeit (bis 150°C) mit einer guten Beständigkeit gegen aggressive Medien, wie beispielsweise Säuren, aromatische Kohlenwasserstoffe etc. Überdies weist ETFE vorteilhaft ein geringes Gewicht auf und ist besonders vorteilhaft als elektrischer Isolator einsetzbar.

Um eine axiale Relativbewegung zwischen dem Kabelkern 2.1, 2.2 und der Armierung 3 während des bestimmungsgemäßen Gebrauchs des Kabels 1, insbesondere als geophysikalisches Mess- und Erkundungskabel in langen Bohrlöchern, wirkungsvoll zu verhindern, ist der Kabelkern 2.1, 2.2 mit der Armierung 3 durch Stoff-, Form- und/oder Kraftschluss axial fest verbunden.

Gemäß den Fig. 1 und 2 wird der besagte Stoffschluss bevorzugt mittels eines Klebstoffes 21 bewirkt, der seinerseits auf den Kabelkern 2.1, 2.2 aufgebracht wird und nach dem Ummanteln des Kabelkerns 2.1, 2.2 mit der Armierung 3 respektive dem Aufseilen der Verseildrähte bzw. der Profildrähte 6, 8 auf den Kabelkern 2.1, 2.2 abbindet bzw. aushärtet. Dabei fungiert der Klebstoff in vorteilhafter Weise gleichzeitig als Abdichtmittel, indem es etwaige noch vorhandene Hohlräume zwischen den Profildrähten 6, 8 der Armierung 3 des Kabels 1 und zwischen den Profildrähten 6, 8 und dem Kabelkern 2.1, 2.2 ausfüllt, wodurch eine besonders hohe Fluiddichtheit des Kabels 1 gewährleistet ist. Der Klebstoff 21 besteht bevorzugt aus einem geeigneten synthetischen Polymer.

Was den besagten Form- und/oder Kraftschluss zwischen der Armierung 3 des Kabels 1 und dem Kabelkern 2.1, 2.2 anbelangt, ist dieser mittels wenigstens einer Erhebung 22.1, 22.2 an einer zum Kabelkern 2.1, 2.2 weisenden Kontaktfläche 23 zumindest eines Profildrahtes 6, 8 bewirkt. Die wenigstens eine Erhebung 22.1, 22.2 ist, wie in den Fig. 4a und 4b beispielgebend gezeigt, ausgehend von besagter Kontaktfläche 23 nach radial innen gerichtet, wodurch diese im Zuge des Verseilvorganges in die Oberfläche des Kabelkerns 2.1, 2.2 formschlüssig eindringt, zumindest jedoch gegen die Oberfläche des Kabelkerns 2.1, 2.2 gepresst wird und so eine axiale Relativbewegung zwischen der Armierung 3 und dem Kabelkern 2.1, 2.2 verhindert, zumindest jedoch wirkungsvoll behindert.

Fig. 4a zeigt insoweit ergänzend zur stoffschlüssigen Fügeverbindung eine formschlüssige Fügeverbindung mit beispielgebend einer Erhebung 22.1 je eines Profildrahtes 6, 8. Die Erhebungen 22.1 erstrecken sich längs des betreffenden Profildrahtes 6, 8. Durch die erfolgte Verseilung schlingen sich die Erhebungen 22.1 wendelförmig um beispielsweise den Kabelkern 2.2 und dringen dabei in die Oberfläche desselben formschlüssig ein. Dadurch wird eine axiale Relativbewegung zwischen den Profildrähten 6, 8 respektive der Armierung 3 und dem Kabelkern 2.2 verhindern, zumindest jedoch wirkungsvoll behindern.

Fig. 4b zeigt eine alternative formschlüssige Fügeverbindung der Armierung 3 mit dem Kabelkern 2.2. Im Wesentlichen sind hier eine oder mehrere sich quer zur Längserstreckung je eines Profildrahtes 6, 8 erstreckende Erhebungen 22.2 vorgesehen. Sind mehrere derartige Erhebungen 22.2 je Profildraht 6, 8 vorgesehen (nicht zeichnerisch dargestellt), ist beispielsweise eine Kontaktfläche 23 mit dem Kabelkern 2.2 gebildet, welche nach Art einer Zahnstange zumindest abschnittsweise abwechselnd Erhebungen 22.2, sozusagen Zähne, sowie ZahnLücken aufweist. Die Zähne dringen formschlüssig in die Oberfläche des Kabelkerns 2.2 ein, wodurch eine axiale Relativbewegung zwischen den Profildrähten 6, 8 respektive der Armierung 3 und dem Kabelkern 2.2 verhindert, zumindest jedoch wirkungsvoll behindert ist/wird.

Wie bereits oben ausgeführt, bestehen die Profildrähte 6, 8 bevorzugt aus einem Stahl, der seinerseits geeignet ist, hohen und höchsten auf das Kabel 1 einwirkenden Kräften zu widerstehen, beispielsweise bei Verwendung desselben für geophysikalische Mess- und Erkundungszwecke, insbesondere in der Erdöl- und Erdgasförderindustrie. Im Hinblick darauf wird besagte wenigstens eine Erhebung 22.1, 22.2 bevorzugt bereits bei der Herstellung des zumindest einen Profildrahtes 6, 8 nach einem Walzverfahren am Profildraht 6, 8 ausgebildet.

Zur Erzielung eines qualitätsgerechten Lagenaufbaus des die Armierung 3 ausbildenden Verseilverbandes sind die Profildrähte 6, 8 aus insbesondere Stahl rückdrehungsfrei verseilt sowie spannnungsfrei in den Verseilverband gelegt, indem die Profildrähte 6, 8 vermittels an sich bekannter Vorformungseinrichtungen vorab eine entsprechende Vorformung erfahren.

Vorstehende Ausführungsbeispiele stellen auf ein Kabel 1 mit einem Kabelkern 2.1, 2.2 und eine den Kabelkern 2.1, 2.2 ummantelnde Armierung 3 ab, welche Armierung 3 "lediglich" durch eine Verseillage der oben beschriebenen Art gebildet ist. Die Erfindung beschränkt sich jedoch nicht auf diese Ausführungsbeispiele, sondern erfasst auch Kabel 1 der gattungsgemäßen Art mit einer Armierung 3, die durch eine Mehrzahl von Lagen gebildet ist, wobei zumindest eine, bevorzugt jedoch mehrere besagter Verseillagen durch Profildrähte 6, 8 der oben beschriebenen Art, gebildet sind (nicht zeichnerisch dargestellt).

### Bezugszeichenliste

- 1: Kabel
- 2.1: Kabelkern
- 2.2: Kabelkern
- 3: Armierung
- 4: Kontaktflächen (erste Profildrähte 6)
- 5: Kontaktflächen (zweite Profildrähte 8)
- 6: erste Profildrähte
- 7: Längssteg
- 7a: erster Abschnitt
- 7b: zweiter Abschnitt
- 8: zweite Profildrähte
- 9: Längsnut
- 10: elektrischer Leiter
- 11: Mantel
- 12: Mittel zur elektromagnetischen Abschirmung
- 13: Außenmantelfläche (Mantel 11)
- 14: Rohr
- 15: Leiterbündel
- 16: Hohlraum
- 17: Schutzisolierung (Leiterbündel 15)
- 18: Mittel zur elektromagnetischen Abschirmung
- 19: Außenmantelfläche (Rohr 14)
- 20: Mantel
- 21: Klebstoff
- 22.1: Erhebung
- 22.2: Erhebung
- 23: Kontaktfläche

## Patentansprüche

1. Kabel (1) hoher Steifigkeit, insbesondere hoher Axialsteifigkeit, mit einem Kabelkern (2.1, 2.2) und einem denselben ummantelnden, eine Armierung (3) ausbildenden Verseilverband, wobei die Armierung (3) aus zumindest einer Verseillage zweier Gruppen über den Umfang des Kabels (1) alternierend angeordneter Verseildrähte unterschiedlichen Querschnitts mit zueinander formkomplementär ausgebildeten Kontaktflächen (4, 5) aufgebaut ist, und wobei die Verseildrähte einen bogenförmigen Profilquerschnitt aufweisen, der auf die Grundgeometrie eines Sektorprofils eines Kreisringes zurückgeführt ist, **dadurch gekennzeichnet, dass**
- eine Gruppe Verseildrähte durch erste Profildrähte (6) gebildet ist, welche ersten Profildrähte (6) beidseitig des Sektorprofils im Bereich ihrer Kontaktflächen (4) jeweils wenigstens einen sich längs des Profildrahtes (6) erstreckenden Längssteg (7) aufweisen, wogegen
- die andere Gruppe Verseildrähte durch zweite Profildrähte (8) gebildet ist, welche zweiten Profildrähte (8) im Bereich ihrer Kontaktflächen (5) jeweils zu besagten Längsstegen (7) der unmittelbar benachbarten ersten Profildrähte (6) korrespondierende und je einen Längssteg (7) formschlüssig aufnehmende Längsnuten (9) aufweisen.

2. Kabel (1) nach Anspruch 1, **dadurch gekennzeichnet, dass** die Längsstege (7), im Querschnitt eines jeden ersten Profildrahtes (6) gesehen zu ihrem freien Ende hin sich verjüngend ausgebildet sind.

3. Kabel (1) nach Anspruch 2, **dadurch gekennzeichnet, dass** die Längsstege (7) im Querschnitt gesehen trapezförmig, konvex gerundet oder spitz zulaufend, ausgebildet sind oder dass zumindest die freien Enden der Längsstege (7) im Querschnitt gesehen trapezförmig, konvex gerundet oder spitz zulaufend, ausgebildet sind.

4. Kabel (1) nach einem der Ansprüche 1 bis 3, **dadurch gekennzeichnet, dass** der Kabelkern (2.1, 2.2) einen Vollquerschnitt oder einen Rohrquerschnitt aufweist.

5. Kabel (1) nach einem der Ansprüche 1 bis 4, **dadurch gekennzeichnet, dass** der Kabelkern (2.1, 2.2) zumindest einen elektrischen Leiter (10) und/oder Signalleiter aufweist.

6. Kabel (1) nach Anspruch 5, **dadurch gekennzeichnet, dass** der Kabelkern (2.1, 2.2) wenigstens ein Mittel (12, 18) zur elektromagnetischen Abschirmung des zumindest einen elektrischen Leiters (10) und/oder Signalleiters aufweist.

7. Kabel (1) nach Anspruch 6, **dadurch gekennzeichnet, dass** das wenigstens eine Mittel (12, 18) zur elektromagnetischen Abschirmung durch ein bandförmiges oder schlauchförmiges Metallnetz und/oder durch eine bandförmige oder schlauchförmige Metallfolie gebildet ist.

8. Kabel (1) nach einem der Ansprüche 1 bis 7, **dadurch gekennzeichnet, dass** der Kabelkern (2.1, 2.2) mit der Armierung (3) durch Stoff-, Form- und/oder Kraftschluss axial fest verbunden ist.

9. Kabel (1) nach Anspruch 8, **dadurch gekennzeichnet, dass** der Stoffschluss mittels eines Klebstoffes (21) bewirkt ist.

10. Kabel (1) nach Anspruch 8, **dadurch gekennzeichnet, dass** der Form- und/oder Kraftschluss mittels wenigstens einer Erhebung (22.1, 22.2) bewirkt ist, welche Erhebung (22.1, 22.2) an einer zum Kabelkern (2.1, 2.2) weisenden Kontaktfläche (23) zumindest eines Profildrahtes (6, 8) ausgebildet ist und nach radial innen gerichtet mittel- oder unmittelbar in die Oberfläche des Kabelkerns (2.1, 2.2) formschlüssig eindringt, zumindest jedoch gegen die Oberfläche des Kabelkerns (2.1, 2.2) gepresst wird/ist.

11. Kabel (1) nach Anspruch 10, **dadurch gekennzeichnet, dass** die wenigstens eine Erhebung (22.1, 22.2) sich längs des Profildrahtes (6, 8) oder quer zur Längserstreckung des Profildrahtes (6, 8) erstreckt.

12. Kabel (1) nach einem der Ansprüche 1 bis 11, **dadurch gekennzeichnet, dass** die Profildrähte (6, 8) aus einem Stahl bestehen.

13. Kabel (1) nach einem der Ansprüche 1 bis 12, **dadurch gekennzeichnet, dass** die Profildrähte (6, 8) rückdrehungsfrei verseilt sowie eine Vorformung erfahrend, spannungsfrei in den Verseilverband gelegt sind.

14. Verwendung eines Kabels (1) nach einem der Ansprüche 1 bis 13 für geophysikalische Mess- und Erkundungszwecke, insbesondere in der Erdöl- und Erdgasförderindustrie, oder als See-Kabel (1) oder sonstiges Kabel (1).
